# EUROPÄISCHE PATENTSCHRIFT

(11) **EP 0 982 822 B1**
(45) Veröffentlichungstag und Bekanntmachung des Hinweises auf die Patenterteilung: **24.12.2008**
(21) Anmeldenummer: 99202619.5
(22) Anmeldetag: 10.08.1999
(51) Int. Cl.: H02B 7/08, E02D 29/12

(54) **Verteilungsstation für Elektrizität**
Distribution station for electricity
Station de distribution d'électricité

(30) Priorität: 21.08.1998 NL 1009924
(43) Veröffentlichungstag der Anmeldung: 01.03.2000
(73) Patentinhaber: Odink & Koenderink B.V., 7482 CA Haaksbergen (NL)
(72) Erfinder: Kienhuis, Johannes Henricus Maria, 7591 GA Denekamp (NL)
(74) Vertreter: Boelsma, Gerben Harm

(56) Entgegenhaltungen:
- DE-A- 3 322 584
- DE-U- 29 612 083

## Beschreibung

Die Erfindung bezieht sich auf eine Verteilungsstation für Elektrizität, wie definiert im ersten Teils des Anspruchs 1.

Eine derartige Station ist in der DE-A-33 22 584 offenbart worden (siehe die Ausführung nach fig. 1). Dabei handelt es sich um eine Station einer fernmeldetechnischen Art, wobei dei Niederspannungs-Vertreilereinheit also von einem oder mehreren fernmeldetechnischen Geräte gebildet wird. Der Schacht-boden ist mit Abflussöffnungen versehen, so dass bei Überflutungen Wasser (Grundwasser) durch die Abflussöffnungen in das Schachtinnere strömen kann. In der Schliesslage eines schwenkbare herausklappbare Montagewand ragt einen Kragen davon in das Schachtinnere hinein, so dass bei bis über dem unteren Kragenrand hochsteigendem Wasser sich ein von der Kragen umschlossenes Luftkissen bildet, in dem die vom Montagewand getragenen Geräte gegen Kontakt mit dem Wasser geschützt werden. Nur der obere Teil des Montagewands wird also tatsächlich wasserfrei gehalten.

Eine sich bei der bekannten Vorrichtung ringsherum um den Montagewand erstreckende Wasserrinne dient nur zum Auffangen und Ableiten von Regenwasser und hat eine tiefe, welche wesentlich kleiner als die Höhe der Ringwand ist.

Die Erfindung beabsichtigt nunmehr eine verbesserte Vorrichtung der gattungsgemässen Art zu schaffen.

Insbesondere beabsichtigt die Erfindung nunmehr eine Verteilungsstation der gattungsgemässen Art zu schaffen, die in der Weise verbessert ist, dass sie ohne Gefahr für Hineindringen von Grundwasser und/oder Oberflächenwasser ganz in den Boden eingesenkt werden kann.

Erfindungsgemäss wird dieser Zweck erreicht mit den im zweiten Teil des Anspruchs 1 erwähnten Merkmalen. Der Kasten ist gasdicht ausgebildet und die Deckelachseliegt in oder nahezu in der Ebene durch den oberen Rand des Kastens, während ringsherum eine Wasserrinne um den Kasten vorgesehen ist, deren ringförmiger Raum zwischen der Umfangswand des Deckels - in der Schliesslage desselben - und dem oberen Teil der Umfangswand des Kastens als Luftpufferraum arbeitet. Die erfindungsgemäsen Masnahmen haben zur Folge, dass die Taucherglockenwirkung in der vertieften Wasserrinne stattfindet, so dass das die zu schützende Niederspannungs-Verteilereinheit enthaltende Kasteninnere volständig wasserfrei bleibt.

Indem der Kasten gasdicht ausgebildet ist, ist er gegen das Hineindringen von Grundwasser geschützt. Indem die Deckelachse in oder nahezu in der Ebene durch den oberen Rand des Kastens liegt, wird der Deckel in der Schliesslage auf oder nahezu auf dem oberen Rand des Kastens anliegen und ist der Kastenraum über einen schmalen Spalt mit dem Raum innerhalb der Rinne verbunden. Der Luftpufferraum zwischen der Aussenumfangsrand des geschlossenen Deckels und dem oberen Teil der Umfangswand des Kastens bildet dabei ein effektives Hindernis gegen das Hineindringen von Oberflächenwasser, das an der Aussenseite der Umfangswand des Deckels in die Rinne strömt. Sobald der Wasserspiegel in der Rinne bis über dem unteren Rand der Umfangswand des geschlossenen Deckels steigt, ist ein Wasserschloss entstanden, wodurch eine weitere Steigung des Wasserspiegels im Luftpufferraum eine Erhöhung des Druckes im Luftpufferraum und im Kasten mit sich bringt, wodurch diese Steigung beschränkt bleibt. Die Sicherheitsmarge zwischen den Wasserspiegeln innerhalb und ausserhalb der Umfangswand des Deckels ist selbstverständlich von der Höhe der Umfangswand, wie auch vom Inhalt des Luftpufferraums im Verhältnis zum Kastenvolumen abhängig.

Zu bemerken ist, dass die DE-U-296 12 083 eine in einem im Boden versenkten Kasten versenkbare Elektrantanordung offenbart, wobei der Kasten mittels eines schweren Deckels verschliessbar ist und durch eine im oberen Rand des Kastens eingelassene Dichtungslippe gegen das von aussen her Eindringen von Wasser agbedichtet ist. Die Wandung und der Boden des Kastens sind auch in diesem Fall wasserundurchlässig. Die zu schützende Senkeinheit is am Deckel befestigt und kann mit dem Deckel insgesamt hochgefahren werden. Einer Wasserrinne mit Taucherglockenwirkung ist nicht vorgesehen.

Ein weiterer Zweck der Erfindung ist, etwaige Arbeit an der Niederspannungs-Verteileinheit übererdisch ausführen zu können. Dieser Zweck wird erreicht durch die Anordnung, wie definiert in den abhangigen Ansprüchen.

Weitere Vorteile der Erfindung werden unten an Hand der Zeichnung mit einem Ausführungsbeispiel näher erläutert.
Fig. 1 ist ein schematischer Schnitt durch den erfindungsgemässen Verteilungskasten, bei geschlossenem Deckel;
Fig. 2 ist eine Draufsicht des Verteilungskastens nach Fig. 1, nach Abnehmen des Deckels;
Fig. 3 ist ein Schnitt wie derjenige nach Fig. 1, bei aufgeklapptem Deckel und
Fig. 4 ist ein Querschnitt wie derjenige nach Fig. 3, wobei der Tragrahmen mit der Niederspannungs-Verteileinheit ebenfalls in die aufgeklappte Lage gebracht worden ist.

Der gezeichnete Verteilungskasten besteht aus einem gasdichten, z.B. aus Metallblech zusammengeschweissten und gegen Korrosion behandelten Kasten 1 mit einem Boden la und aufstehenden Seitenwänden 1b. Der Kasten 1 ist mittels unterhalb des Bodens la vorgesehener Versteifungsprofile 2 im Boden 3 verankert. 4 ist ein Anti-Kondenswasserpfropfen zum Abführen des sich gegebenenfalls innerhalb des Kastens bildenden Kondenswassers. Um den Kasten 1 erstreckt sich eine verhältnismässig breite und tiefe Rinne 5, welche aus dem gleichen Material (Blechmetall) wie dasjenige des Kastens 1 geformt sein kann und deren Innenumfangswand von der Kastenseitenwand 1b gebildet wird.

Der Kasten 1 ist mittels eines um eine waagerechte Achse 7 aufklappbaren Deckels 6 verschliessbar, welcher Deckel gleichfalls aus Metallblech geformt sein kann. Der Deckel 6 weist eine rechtwinklig umgebogene Umfangswand 6a auf und ist an der Innenseite (d.h. unteren Seite) mit Versteifungsprofilen 6b versehen.

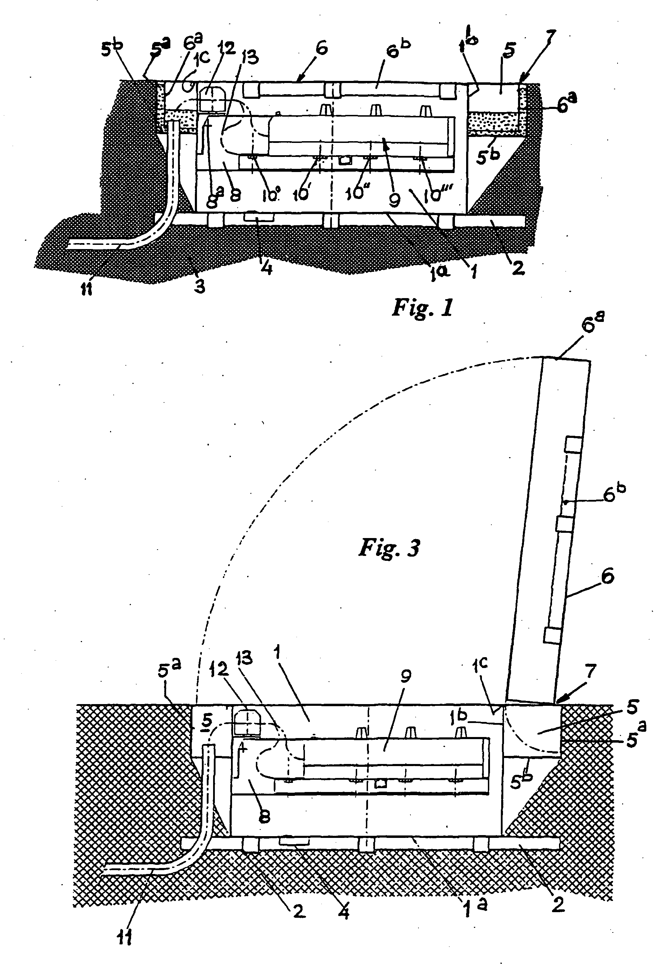

In der Schliesslage (Fig. 1) liegt der Deckel 6 auf dem oberen Rand lc des Kastens 1, während die Umfangswand 6a des Deckels sich in der Nähe der Aussenumfangswand 5a der Rinne 5 befindet und mit dem unteren Rand bis gerade über dem Rinnenboden 5b reicht. Aus Fig. 1 ist erkennbar, dass die Rinne 5 an der Seite der Deckelachse 7 verbreitert ist um den zum Öffnen und Schliessen des Deckels 5 (siehe Fig. 3) von der verhältnismässig tief reichenden Umfangswand 6a benötigten Bewegungsraum zu schaffen.

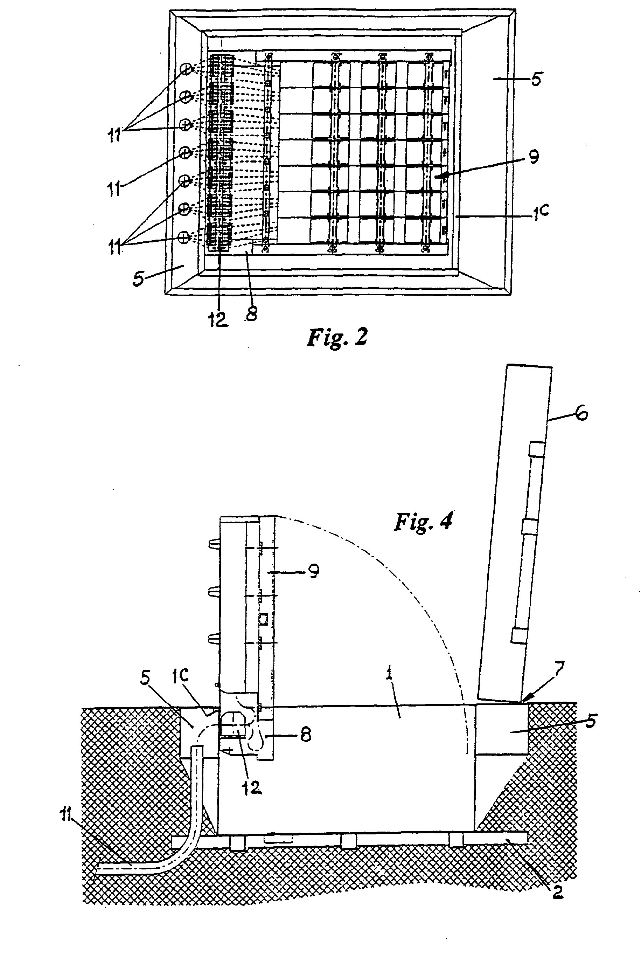

Innerhalb des Kastens befindet sich ein Tragrahmen 8, in dem eine Niederspannungs-Verteileinheit 9 mit vier Spannungsschienen 10°, 10', 10" und 10"' angeordnet ist. Der Tragrahmen 8 ist um eine waagerechte Achse 8a aufklappbar montiert, damit er bei aufgeklapptem Deckel (Fig. 3 und 4) aus der waagerechten Lage innerhalb des Kastens 1 (Fig. 3) in die Lage nach Fig. 4 aufgeklappt werden kann, in welcher Lage die erforderliche Arbeit an der Niederspannungs-Verteileinheit 9 übererdisch und sicher ausgeführt werden kann.

Mit 11 ist eine Anzahl von (im gezeigten Beispiel sieben) Grundkabeln bezeichnet, welche an der von der Deckelachse 7 abgewendeten Seite des Kastens 1 aus einem etwa waagerechten Verlauf nach oben biegen und in einer Linie nebeneinander durch den Rinnenboden 5b hindurchstecken. Von den sieben verhältnismässig steifen Grundkabeln 11 bildet z.B. der mittlere Kabel den eingehenden oder Speisekabel, während die übrigen sechs Kabel ausgehende Kabel sind, welche zu den ortsfesten Verbrauchsstellen führen.

Von allen sieben Kabeln 11 stecken die (vier) Aderen abdichtend durch die angrenzende Rinnen/Kastenwand 1b hindurch zum Anschliessen an den zugehörigen Teilen eines in diesem Fall siebenteiligen Übergangsblockes 12, der oben im Kasten gegen die Rinnen/Kastenwand 1b befestigt ist. Innerhalb des Übergangsblockes sind die Adern mit biegsamen Kabeln 13 verbunden, welche über einen Sicherheits-Lastunterbrecher zu den unterschiedlichen Schienen 10°, 10', 10", 10"' führen.

Im Rinnenboden 5b, z.B. nahe am Aussenumfangsrand desselben, sind Wasserabflussöffnungen vorgesehen (in der Zeichnung nicht gezeigt).

In normalem Betrieb ist die Niederspannungs-Verteileinheit, bei geschlossenem und verriegeltem Deckel 6, sicher im Kasten eingeschlossen.

Nur im Falle etwaiger Arbeit an (Verbindungen zur) der Niederspannungs-Verteileinheit 9 wird der Deckel zeitweilig aufgeklappt.

Infolge der gasdichten Ausbildung des Kastens 1 wird kein Grundwasser hereindringen können. (Regen)wasser, das während des normalen Betriebs (d.h. bei geschlossenem Deckel) zwischen der Aussenumfangswand 5a der Rinne und der Umfangswand 6a des Deckels hineinströmt, kann normalerweise über die Abflussöffnungen im Rinnenboden 5b in die umgebenden Erde wegströmen. Bei ungenügender oder stockender Wasserabfuhr aus der Rinne 5 (z.B. im Falle eines extrem hohen Grundwasserniveaus) wird das Wasserniveau in der Rinne bis über dem unteren Rand der Deckelwand 6a steigen. In diesem Moment bildet sich ein Wasserschloss, wodurch der Rinnenteil unter dem Deckel 6 und damit der Kasten 1 luftdicht vom Gegend abgeschlossen werden. Infolge der Luftglockenwirkung wird das Wasserniveau im von der Deckelwand 6a umschlossenen Rinnenteil jederzeit in ausreichendem Mass unter dem Niveau des Kastenrandes lc bleiben (siehe Fig. 1), wodurch das Kasteninnere auch bei extremem Hochwasser trocken bleibt.

## Patentansprüche

1. Verteilungsstation für Elektrizität, mit einem in den Boden einzusenkenden, eine Niederspannungs-Verteileinheit (9) enthaltenden Kasten (1), welcher durch ein um eine in der Nähe eines Deckelrandes liegende Achse (7) drehbaren Deckel (6) verschliessbar ist, welcher Deckel (6) ringsherum mit einer nach unten abstehenden Umfangswand (6a) versehen ist, wobei mindestens einen Grundkabel (11) vorgesehen ist, wobei die Deckelachse(7) in oder nahezu in der Fläche durch den oberen Rand (1c) des Kastens (1) liegt, während ringsherum eine Wasserrinne (5) um den Kasten (1) vorgesehen ist, **dadurch gekennzeichnet, dass** der mindestens einen Grundkabel eine eingehende Grundleitung und abgehende Grundkabel umfasst dass der Kasten (1) gasdicht ausgebildet ist, dass der Umfangswand (6a) den Deckel (6) bei geschlossenem Deckel (6) mit Abstand über den oberen Rand (1c) des Kastens (1) hinabreicht und dass die Wasserrinne (5) einen ringförmiger Raum zwischen der Umfangswand (6a) des Deckels (6) - in der Schliesslage desselben - und dem oberen Teil der Umfangswand (1b) des Kastens (1) aufweist welcher als Luftpufferraum mit einer Taucherglockenwirkung arbeitet.

2. Verteilungsstation nach Anspruch 1, **dadurch gekennzeichnet, dass** der Kasten (1) und der Deckel (6) aus Metallblech zusammengeschweisst sind.

3. Verteilungsstation nach Ansprüchen 1-2, **dadurch gekennzeichnet, dass** die Niederspannungs-Verteilungseinheit (9) in einem Rahmen (8) angeordnet ist, der aus einer liegenden Position innerhalb des Kastens (1) in eine über dem Kasten (1) ausragende Position aufklappbar ist.

4. Verteilungsstation nach Anspruch 3, **dadurch gekennzeichnet, dass** der Rahmen (8) um eine Achse (8a) aufklappbar ist, welche in der Nähe der von der Achse (7) des Deckels (6) abgewendeten Kastenwand liegt.

5. Verteilungsstation nach Ansprüchen 3-4, **dadurch gekennzeichnet, dass** die Gelenkachse (8a) des Rahmens (8) parallel zu Stromschienen (10) verläuft, welche zur Niederspannungs-Verteilungseinheit (9) gehören.

6. Verteilungsstation nach Ansprüchen 4-5, **dadurch gekennzeichnet, dass** sämtliche Grundleitungen bezw. -Kabel (11) in einer Reihe durch den an der Seite der Gelenkachse (8a) des Rahmens ( 8) befindlichen Rinnenboden (5b) hindurch nach oben ragen und die gesonderten Adern derselben durch den angrenzenden Teil der Kastenwand (1 b) hindurch an einem an der Innenseite jenes Kastenwandteiles fest über der Gelenkachse (8a) des Rahmens montierten Übergangsblöck (12) angeschlossen sind.

## Claims

1. Distribution station for electricity, comprising a box (1) which can be sunk into the ground, having a low voltage distribution unit (9), which is closeable by a cover (6) which is rotatable around an axis (7) lying in or close to an edge of the cover (6), which cover (6) is provided all around with a downwardly extending circumferential wall (6a), wherein at least one ground cable (11) is provided, wherein the cover axis (7) lies in or close to a plane extending through the upper edge (1c) of the box (1), wherein a water gutter (5) is provided all around the box (1), **characterized in that**, the at least one ground cable comprises an incoming ground line and an outgoing ground cable, that the box (1) is constructed gas tight, that the circumferential wall (6a) of the cover (6), in the case that the cover (6) is closed, extends at a distance over the upper edge (1 c) of the box (1), and **in that** the water gutter (5) comprises a ring-shaped space between the circumferential wall (6a) of the cover (6) in the closed position thereof, and the upper part of the circumferential wall (1b) of the box (1), which operates as an air buffering space with a diving bell function.

2. Distribution station according to claim 1, **characterized in that**, the box (1) and the cover (6) made from sheet metal, are welded together.

3. Distribution station according to claim 1 or 2, **characterized in that**, the low voltage distribution unit (9) is located in a frame (8), which is hinged from a position lying inside of the box (1) into a position protruding above the box (1).

4. Distribution station according to claim 3, **characterized in that**, the frame (8) is hinged on a shaft (8a), which lies near to the box wall turned away from the axis (7) of the cover (6).

5. Distribution station according to claim 3 or 4, **characterized in that**, the hinge shaft (8a) of the frame (8) runs parallel to bus bars (10), which belong to the low voltage distribution unit (9).

6. Distribution station according to claim 4 or 5, **characterized in that**, all ground lines or cables (11) protrude upwards in a row through a gutter floor (5b) located at the side of the hinge shaft (8a) of the frame (8) and the separate wires of the same are connected through the adjoining part of the box wall (1 b) to a transition block (12) mounted securely via the hinge shaft (8a) of the frame to the inner side of that box wall part.

## Revendications

1. Station de distribution d'électricité, avec un boîtier (1) à encastrer dans le sol contenant une unité de distribution basse tension (9), lequel peut être fermé au moyen d'un couvercle (6) tournant autour d'un axe (7) se trouvant à proximité d'un bord du couvercle, lequel couvercle (6) est pourvu tout autour d'une paroi périphérique s'étendant vers le bas (6a), où au moins un câble principal (11) est prédisposé, où l'axe de couvercle (7) s'étend dans ou près de la superficie suivant le bord supérieur (1c) du boîtier (1), alors une rigole à eau (5) est prédisposée tout autour du boîtier (1), **caractérisée en ce que** l'au moins un câble principal comprend une ligne principale en entrée et un câble principal de départ, **en ce que** le boîtier (1) est réalisé étanche aux gaz, **en ce que** la paroi périphérique (6a) du couvercle (6) avec le couvercle (6) fermé descend vers le bas d'une distance sur le bord supérieur (1c) du boîtier (1) et **en ce que** la rigole à eau (5) comporte une chambre annulaire entre la paroi périphérique (6a) du couvercle (6) - dans la position de fermeture de celui-ci - et la partie supérieure de la paroi périphérique (1b) du boîtier (1), lequel opère comme une chambre de tampon pneumatique avec un effet de cloche à plongeur.

2. Station de distribution selon la revendication 1, **caractérisée en ce que** le boîtier (1) et le couvercle (6) sont soudés à partir d'une tôle métallique.

3. Station de distribution selon les revendications 1-2, **caractérisée en ce que** l'unité de distribution basse tension (9) est agencée dans un châssis (8) qui est relevable d'une position reposant à l'intérieur du boîtier (1) à une position en saillie au-dessus du boîtier (1).

4. Station de distribution selon la revendication 3, **caractérisée en ce que** le châssis (8) est relevable autour d'un axe (8a) qui s'étend à proximité de la paroi de boîtier opposée de l'axe (7) du couvercle (6).

5. Station de distribution selon les revendications 3-4, **caractérisée en ce que** l'axe d'articulation (8a) du châssis (8) s'étend parallèlement à des barres conductrices (10) qui font partie de l'unité de distribution basse tension (9).

6. Station de distribution selon les revendications 4-5, **caractérisée en ce que** l'ensemble des lignes principales et câbles principaux (11) font saillie vers le haut dans une rangée à travers le fond de rigole (5b) du côté de l'axe d'articulation (8a) du châssis (8) et les fils individuels de ceux-ci sont raccordés à travers la partie adjacente de la paroi de boîtier (1 b) à un bloc de raccordement (12) monté fixe au-dessus de l'axe d'articulation (8a) du châssis contre le côté intérieur de cette partie de paroi de boîtier.
